# EUROPÄISCHE PATENTSCHRIFT

(11) **EP 0 582 362 B1**
(45) Veröffentlichungstag und Bekanntmachung des Hinweises auf die Patenterteilung: **08.05.1996**
(21) Anmeldenummer: 93250220.6
(22) Anmeldetag: 03.08.1993
(51) Int. Cl.: A22C 17/00

(54) **Verfahren zur automatischen Produktion von mit Lebensmitteln bestückten Speilen**
Method and device for automatically producing food products on skewers
Procédé et dispositif pour la fabrication automatique de brochettes de produits alimentaires

(30) Priorität: 04.08.1992 DE 4225580
(43) Veröffentlichungstag der Anmeldung: 09.02.1994
(73) Patentinhaber: HOPPE GmbH, D-33181 Wünnenberg-Haaren (DE)
(72) Erfinder: Klose, Kurt, D-32657 Lemgo (DE)
(74) Vertreter: Maikowski, Michael, Dipl.-Ing. Dr.

(56) Entgegenhaltungen:
- EP-A- 0 078 232
- EP-A- 0 230 841
- DE-A- 2 851 062
- DE-B- 2 608 687
- FR-A- 2 675 343
- US-A- 3 550 188
- US-A- 3 835 761

## Beschreibung

Die Erfindung betrifft ein Verfahren und eine Vorrichtung zur automatischen Produktion von mit Lebensmitteln bestückten Speilen, bei dem die Lebensmittel mit einer Fördervorrichtung in eine Stechzone transportiert und dort von mindestens einem einen Stechhub relativ zur Fördervorrichtung ausführenden, an einer Stechvorrichtung befestigten Stechdorn aufgestochen werden.

Derartige, mit Lebensmitteln bestückte Speile werden beispielsweise als Schaschlik-Spieße hergestellt und in großen Mengen an Imbißstuben geliefert. Bei der manuellen Herstellung dieser Produkte werden im allgemeinen einzelne Lebensmittelstücke nacheinander möglichst mittig auf die Speile aufgestochen. Für die automatische Produktion sind zwei unterschiedliche Herstellungsverfahren bekannt.

Bei einem bekannten Verfahren werden verschiedene Lebensmittelschichten manuell in einen quaderförmigen Behälter mit an seinen Seiten angeordneten, vertikal verlaufenden Schlitzen eingefüllt. Anschließend wird eine Matrix von Speilen, die gleichmäßig über die rechteckige Grundfläche des Behälters verteilt sind, in vertikaler Richtung durch die Lebensmittelschichten gedrückt. Danach werden die in dem Behälter befindlichen Lebensmittelschichten mit durch die Schlitze in den Seitenwänden der Behälter geführten Messern zerschnitten. Die Messer zerschneiden die Lebensmittel in zwei rechtwinklig zueinander liegenden Richtungen, so daß um jeden Speil herum ein länglicher Lebensmittelblock mit quadratischem Querschnitt ausgeschnitten wird. Nach diesem Verfahren arbeitende Maschinen sind in der EP 0 078 232 B1 und der EP 0 230 841 A1 offenbart.

Der Personalaufwand dieses Produktionsverfahrens ist relativ hoch, da die Lebensmittelschichten manuell in die Behälter eingelegt werden müssen. Bei dem schichtweisen Einlegen kleiner Lebensmittelstücke mit variierender Form, beispielsweise Zwiebelsegmenten, ergeben sich zwangsläufig Bereiche mit Überlappungen oder Leerbereiche. Es kann nicht sichergestellt werden, daß derartige Lebensmittelstücke von den Speilen mittig durchstochen werden. Durch das Schneiden der Lebensmittelschichten nach dem Aufstechen erhält der nach diesem Verfahren hergestellte Spieß eine quaderförmige Gestalt und weicht erheblich von dem Erscheinungsbild eines manuell hergestellten Spießes ab. Das durch dieses maschinelle Herstellungsverfahren hervorgerufene Erscheinungsbild kennzeichnet die Spieße als Massenprodukt, so daß die Akzeptanz durch den Käufer im Vergleich zu manuell gefertigten Spießen gering ist. Schließlich übt der in einem Stechhub durch alle Lebensmittellagen gleichzeitig gestochene Speil große Druckkräfte auf die zuletzt durchstochenen Lebensmittellagen aus. Hierdurch können die Lebensmittel gequetscht und beschädigt werden.

Bei einem weiteren bekannten Herstellungsverfahren werden die auf einen Speil aufzuspießenden Lebensmittelstücke in der Reihenfolge, in der sie aufgespießt werden, horizontal in Beschickmulden der Fördervorrichtung eingelegt und anschließend in einem Stechhub durchstochen. Auch hier werden auf die zuletzt durchstochenen Lebensmittelstücke von den davorliegenden Lebensmittelstücken große Druckkräfte ausgeübt, wodurch sich die Gefahr des Zerquetschens der Lebensmittelstücke ergibt. Da die Lebensmittelstücke im allgemeinen unterschiedliche Größen aufweisen, ist ein mittiges Durchstechen aller Lebensmittelstücke bei diesem Verfahren nicht möglich. Das Zentrum der kleinen Lebensmittelstücke liegt tiefer als das Zentrum der großen, so daß zwangsläufig ein außermittiges Durchstechen einiger Lebensmittelstücke erfolgt. Um dieses außermittige Durchstechen von Lebensmittelstücken unterschiedlicher Größe zu vermeiden, besteht eine in der DE 26 08 687 B1 beschriebene Beschickmulde der Fördervorrichtung aus einer Mehrzahl teleskopisch auseinander- und zusammenfahrbarer Muldenelemente, deren Größe im wesentlichen an die Größe der jeweiligen Lebensmittelstücke angepaßt ist. Eine derartige, aus Muldenelementen bestehende Fördervorrichtung ist sehr schwer zu reinigen, da sich Lebensmittelreste in den Spalten zwischen den Mulden festsetzen. Außerdem berücksichtigt eine derartige Anordnung nur die Durchschnittsgröße der unterschiedlichen Lebensmittelstücke, zum Beispiel Fleischstücke, Zwiebelstücke und Speckstücke. Unterschiedliche Größen der Lebensmittelstücke einer Art werden nicht berücksichtigt, so daß weiterhin ein außermittiges Durchstechen der Lebensmittelstücke erfolgen kann.

Nach dem Verfahren nach DE 28 51 062 A1 wird das Zerquetschen der Lebensmittelstücke dadurch vermieden, daß die Lebensmittelstücke eines Spießes in mehreren Portionen in der Speichervorrichtung vorgelegt werden und jede Portion durch einen eigenen Spießvorgang auf den Spieß aufgesteckt wird. Um eine gleiche Hublänge für alle aufzustechenden Lebensmittelstücke zu gewährleisten, wird nach jedem Stechvorgang der Vorhub des Stechdornabstandes um eine konstante Länge nach oben verschoben.

Aufgabe der Erfindung ist es, ein gattungsgemäßes Verfahren und eine gattungsgemäße Vorrichtung zu schaffen, die die Nachteile der bekannten Verfahren und Maschinen vermeidet und insbesondere ein im wesentlichen mittiges Durchstechen aller Lebensmittelstücke ermöglicht, ohne daß einzelne Lebensmittelstücke beim Aufstechvorgang übermäßig gequetscht werden.

Diese Aufgabe wird erfindungsgemäß dadurch gelöst, daß einzelne Lebensmittelstücke mit separaten Stechhüben auf den Stechdorn aufgestochen werden, wobei der das Einstechen des Stechdorns in das Lebensmittelstück bewirkende Wirkanteil eines jeden Stechhubes im wesentlichen dem Abstand der Endposition des Lebensmittelstücks von der Spitze des Stechdorns entspricht und bei einem Stechhub gleichzeitig unterschiedliche Lebensmittelstücke auf unterschiedliche Stechdorne aufgestochen werden.

Durch das Aufstechen einzelner Lebensmittelstücke mit separaten Stechhüben ist es möglich, jedes Lebensmittelstück zentriert zum Stechdorn auszurichten, so daß es mittig durchstochen wird.

Jeder Stechhub besteht aus einem Leerhub des Stechdornes in Richtung auf das Lebensmittelstück hin, aus einem Wirkanteil zum Aufstechen des Lebensmittelstücks und aus einem Rückhub in die Ausgangslage des Stechdorns.

Der Wirkanteil der Stechhübe, d.h. der Anteil des Stechhubes, bei dem der Stechdorn in das Lebensmittelstück eindringt und dieses durchsticht, ist variabel und wird bei jedem Stechhub derart angepaßt, daß jedes Lebensmittelstück im wesentlichen exakt in seine Endposition auf den Stechdorn aufgeschoben wird. Um dies zu erreichen, muß der Wirkanteil des Stechhubes im wesentlichen dem Abstand der Endposition des aufgestochenen Lebensmittelstücks von der Spitze des Stechdorns, die als erstes in das Lebensmittelstück einsticht, entsprechen.

Bei dem erfindungsgemäßen Produktionsverfahren werden die einzelnen Lebensmittelstücke wie bei der manuellen Spießproduktion im wesentlichen mittig aufgestochen und in ihre Endlage geschoben. Dadurch, daß die Lebensmittelstücke einzeln durchstochen und auf den Stechdorn aufgeschoben werden, sind die Reibungskräfte beim Aufstechen erheblich geringer als die Reibungskräfte beim gleichzeitigen Aufstechen aller Lebensmittelstücke. Da die Lebensmittelstücke einzeln positionsgerecht aufgestochen werden, ist ein Zerguetschen weitgehend ausgeschlossen.

Die Lebensmittelstücke müssen nicht notwendigerweise homogen sein, sondern können auch aus vorgefertigten Stücken mit mehreren Lebensmittelschichten, beispielsweise einer Zwiebelschicht und einer Speckschicht, bestehen. Es ist jedoch darauf zu achten, daß die einzelnen Lebensmittelstücke nicht zu dick sind, um ein Quetschen der untersten Lebensmittelschichten beim Aufstechen zu vermeiden.

Das erfindungsgemäße Verfahren kann auf mehrere Weisen realisiert werden. Beispielsweise kann die Fördervorrichtung von einem computergesteuerten Greifarm gebildet werden, der die einzelnen Lebensmittelstücke ergreift und in die Stechzone transportiert, so daß die Lebensmittelstücke mittig vor dem Stechdorn liegen. Eine ebenfalls computergesteuerte Stechvorrichtung kann den linearen Stechhub zum Aufstechen jedes einzelnen Lebensmittelstücks bewirken und den Stechhub jeweils dann beenden, wenn das Lebensmittelstück seine vorgesehene Endposition auf dem Stechdorn erreicht hat. Anschließend ist der Stechdorn mit einem Rückhub aus der Stechzone zu entfernen, so daß der Greifarm das nächste Lebensmittelstück in die Stechzone transportieren kann. Die Steuerung der Hublänge der einzelnen Stechhübe kann beispielsweise mit optischen Mitteln erfolgen, welche ein Signal abgeben, wenn das zuvor aufgespießte Lebensmittelstück an das von dem Greifarm gehaltene Lebensmittelstück stößt.

Vorzugsweise wird das erfindungsgemäße Verfahren jedoch derart ausgestaltet, daß möglichst wenig komplizierte mechanische Bauelemente und möglichst wenig Steuer- und Regelvorrichtungen zum Transportieren der Lebensmittelstücke in die Stechzone sowie zum separaten Aufstechen der Lebensmittelstücke auf die Stechdorne benötigt werden. Darüber hinaus ist anzustreben, daß gleichzeitig mehrere mit Lebensmitteln bestückte Speile hergestellt werden, damit die Produktionsmenge einer nach dem erfindungsgemäßen Verfahren arbeitenden Maschine ausreichend hoch ist.

Um diesen hohen Automationsgrad mit einfachen mechanischen Mitteln zu ermöglichen, erfolgen die Stechhübe der Stechdorne vorzugsweise in vertikaler Richtung. Dabei ist als Fördervorrichtung für den Transport der Lebensmittelstücke ein horizontal verlaufendes Bestückungsband vorgesehen, welches Mulden für die Aufnahme der Lebensmittelstücke aufweist, die mit je einem mittigen Durchgangsloch für das Durchstechen der Stechdorne versehen sind. Das zwei Umlenkrollen umspannende Bestückungsband wird außerhalb der Stechzone mit den Lebensmittelstücken bestückt. Die Bestückung kann wahlweise manuell erfolgen oder durch geeignete Zuführvorrichtungen für die Lebensmittelstücke automatisiert werden. Das Bestückungsband führt diskontinuierliche Transportbewegungen aus, so daß die Lebensmittelstücke in die Stechzone befördert werden und daß Bestückungsband während des Stechvorgangs stillsteht. Die Lebensmittelstücke sind durch die Seitenwände der Aufnahmemulden des Bestückungsbandes derart zum Stechdorn ausgerichtet, daß sie im wesentlichen mittig aufgestochen werden. Der Boden der Aufnahmemulden hält die Lebensmittelstücke während des Stechvorgangs in ihrer vertikalen Position.

Um die simultane Herstellung mehrerer, mit Lebensmitteln bestückter Speile zu ermöglichen, umfaßt das erfindungsgemäße Verfahren vorzugsweise die folgenden Schritte:
a) eine Anzahl verschiedener Lebensmittelstücke, die der Bestückung eines Speiles entspricht, wird in einer Reihe nebeneinanderliegend in die Stechzone transportiert;
b) mehrere Stechdorne werden in regelmäßigen Abständen zueinander an einem in Richtung der Lebensmittelreihen verlaufenden Vorschubmittel der Stechvorrichtung befestigt, wobei die Stechvorrichtung oberhalb der Fördervorrichtung für die Lebensmittelstücke angeordnet ist;
c) das Vorschubmittel bewirkt nach jedem Stechhub einen Vorschub der Stechdorne um den Betrag des Stechdornabstandes, wodurch eine Vergrößerung des Abstandes zwischen dem Stechdorn und der Fördervorrichtung um den Betrag der mittleren Dicke der Lebensmittelstücke erfolgt, wobei die Stechvorrichtung periodische Hübe mit gleichem Hubbetrag ausführt.

Die Lebensmittelstücke werden gemäß Schritt a) nebeneinanderliegend in der Reihenfolge eingebracht, in der sie auf den Speil aufgestochen werden, zum Beispiel Fleischstück, Zwiebelstück, Speckstück. Mehrere Stechdorne werden an einem in der Stechzone über den Lebensmittelreihen liegenden Vorschubmitteln befestigt. Das Vorschubmittel ist dabei so einzustellen, daß die Stechdorne vor jedem Stechhub mittig zu den jeweiligen Lebensmittelstücken ausgerichtet sind.

Anschließend führt die Stechvorrichtung einen Stechhub mit Rückhub aus, bei dem die in einer Reihe nebeneinanderliegenden Lebensmittelstücke von den Stechdornen aufgestochen werden. Der in Vorschubrichtung am weitesten hinten liegende Stechdorn sticht dabei das erste Lebensmittelstück, beispielsweise das Fleischstück, auf, der in Vorschubrichtung davorliegende Stechdorn sticht das zweite Lebensmittelstück, z.B. Zwiebelstück, und der davorliegende Stechdorn das dritte, also das Speckstück auf.

Nach dem Stechhub bewirkt das Vorschubmittel den Vorschub der Stechdorne um den Betrag des Abstandes zwischen zwei Stechdornen, so daß der mit dem ersten Lebensmittelstück bestückte Stechdorn über das zweite Lebensmittelstück transportiert wird, der mit erstem und zweitem Lebensmittelstück bestückte Stechdorn über das dritte Lebensmittelstück usw. transportiert wird. Der mit allen Lebensmittelstücken einer Reihe bestückte Stechdorn wird aus der Stechzone heraustransportiert und kann von dem Vorschubmittel entfernt werden. Bei dieser Ausführungsform des Verfahrens sticht ein Stechdorn also gemäß dem Beispiel erst das Fleischstück, dann das Zwiebelstück und anschließend das Speckstück auf.

Bei dem Vorschub der Stechdorne um den Betrag des Stechdornabstandes erfolgt gleichzeitig eine Vergrößerung des Abstandes zwischen jedem Stechdorn und der Fördervorrichtung um den Betrag der mittleren Dicke der Lebensmittelstücke. Dies wird gemäß eines unten beschriebenen Vorrichtungsanspruchs dadurch erreicht, daß die Vorschubrichtung des Vorschubmittels einen Winkel α zu der horizontalen Fördervorrichtung aufweist, so daß der Vorschub schrägt nach oben erfolgt. Der Stechdorn wird bei einem Vorschub sowohl um den Betrag des Stechdornabstandes in Vorschubrichtung als auch um den Betrag der mittleren Lebensmittelstückdicke nach oben verschoben. Hierdurch wird gewährleistet, daß bei den Stechhüben mit konstanter Hublänge der Wirkanteil eines jeden Stechhubes, d.h. der Abschnitt des Hubweges, in dem der Stechdorn in das Lebensmittelstück eindringt und dieses durchsticht, im wesentlichen gleich dem Abstand der Endposition des Lebensmittelstücks von der Stechdornspitze ist. Bei jedem Stechhub wird also ein Lebensmittelstück bis auf seine Endposition auf den Stechdorn geschoben.

Ein derartiges Herstellungsverfahren mit konstanten Stechhüben, deren Wirkhubanteil durch den schrägen Vorschub der Stechdorne bei zunehmend bestücktem Stechdorn abnimmt, wobei gleichzeitig der Leerhubanteil ansteigt, ermöglicht einen sehr einfachen Hubantrieb der Stechvorrichtung und einen sehr geringen Bedarf an Steuerungs- und Regeleinrichtungen.

Vorzugsweise können die Stechdorne lösbar an dem Vorschubmittel befestigt werden, wobei während eines jeden Stechhubes ein Stechdorn am Anfang des Vorschubmittels befestigt wird und ein Stechdorn am Ende des Vorschubmittels entnommen wird.

Die Produktionsrate des erfindungsgemäßen Verfahrens läßt sich dadurch erhöhen, daß eine Anzahl von Stechdornen in Stechdornreihen angeordnet werden, die in regelmäßigen Abständen zueinander an dem Vorschubsmittel der Stechvorrichtung befestigt werden. Dabei verlaufen die an dem Vorschubmittel befestigten Stechdornreihen quer zur Vorschubrichtung und damit quer zu den Lebensmittelreihen, die von der Fördervorrichtung in die Stechzone transportiert werden.

Während eines jeden Stechhubes sind jeweils eine Stechdornreihe am Anfang des Vorschubmittels zu befestigen und eine Stechdornreihe am Ende des Vorschubmittels zu entnehmen. Das Vorschubmittel bewirkt dabei jeweils den Vorschub einer gesamten Stechdornreihe um den Betrag des Stechdornabstandes in Vorschubrichtung. Die Stechzone verläuft in diesem Fall nicht lediglich oberhalb einer einzelnen Lebensmittelreihe, sondern oberhalb einer Anzahl von Lebensmittelreihen, die der Anzahl der in einer Stechdornreihe befestigten Stechdorne entspricht. Die Fördervorrichtung für die Lebensmittelstücke muß also vor jedem Stechhub eine Anzahl von Lebensmittelreihen in die Stechzone transportieren, die der Anzahl der Stechdorne in einer Stechdornreihe entspricht. Durch die Anordnung von vier Stechdornen in jeder Stechdornreihe läßt sich die Produktionsgeschwindigkeit des Herstellungsverfahrens beispielsweise vervierfachen.

Zur Bildung der Stechdorne können die Speile selbst an der Stechvorrichtung befestigt werden. Dies setzt voraus, daß die Speile eine ausreichende Festigkeit aufweisen, um beim Einstechen in die Lebensmittelstücke nicht wegzuknicken oder durchzubrechen.

Da bei der Herstellung von Schaschlikspießen oder Obstspießen im allgemeinen Holzspeile verwendet werden, ist es vorteilhaft, daß Hohldorne aus Metall zur Bildung der Stechdorne an der Stechvorrichtung befestigt werden. Während eines jeden Stechhubes werden die Lebensmittel von einem vollständig bestückten Hohldorn auf einen Speil bzw. von den Hohldornen einer vollständig bestückten Stechdornreihe auf eine Anzahl Speile gestreift. Um das Einstechen der Hohldorne in die Lebensmittelstücke zu erleichtern, kann deren vorderes Ende angespitzt sein. Ein röhrenförmiger Hohldorn ist hierzu an seinem vorderen Ende schräg abzuschleifen.

Aus Patentanspruch 8 und den folgenden Ansprüchen ergibt sich eine zur Durchführung des erfindungsgemäßen Verfahrens geeignete Vorrichtung.

Die Vorrichtung umfaßt als Fördervorrichtung ein horizontal verlaufendes Bestückungsband, über dem in der Stechzone ein die Stechvorrichtung bildender Hubrahmen angeordnet ist. Der Hubrahmen ist mit einem, den vertikalen Stechhub bewirkenden Antrieb verbunden. Dieser Antrieb ist beispielsweise als Kurbelantrieb ausgebildet, der eine auf eine Kurbelwelle angeordnete Kurbel aufweist, die über eine Antriebsstange mit dem Hubrahmen verbunden ist.

Der Hubrahmen wirkt weiterhin mit einem Vorschubmittel für die Stechdorne zusammen, welches die Stechdorne in vertikaler Lage und in regelmäßigen Abständen zueinander hält. Die Stechdorne können als Einzeldorne oder auf Stechdornreihen mit nebeneinanderliegenden Stechdornen an dem Vorschubmittel befestigt werden.

Das Vorschubmittel ist in Vorschubrichtung zum Bestückungsband um einen Winkel α nach oben geneigt, so daß bei einem Vorschub der Stechdorne um einen dem Stechdornabstand entsprechenden Vorschubweg der Abstand zwischen dem horizontalen Bestückungsband und den Stechdornen um den Betrag der mittleren Dicke der Lebensmittelstücke ansteigt. Weiterhin ist das Vorschubmittel mit einem, den Vorschub bewirkenden Antrieb verbunden.

Damit die erfindungsgemäße Vorrichtung für die Herstellung verschiedener mit Lebensmitteln bestückter Speile, beispielsweise Schaschlikspieße, Bananenspieße oder Traubenspieße, geeignet ist, ist der Winkel α zwischen dem Vorschubmittel und dem Bestückungsband einstellbar.

Zur lösbaren Befestigung der Stechdorne bzw. der die Stechdornreihen haltenden Stechplatten umfaßt das Vorschubmittel in gleichmäßigen Abständen schaltbare Haltekupplungen. Vorzugsweise weist das Vorschubmittel in Vorschubrichtung verlaufende, einander gegenüberliegende Führungsschienen auf, in die Führungsrollen einfügbar sind, welche an den Seitenflächen der Stechplatten befestigt sind. Die Haltekupplungen des Vorschubmittels werden von in Vorschubrichtung angetriebenen, vertikal verlaufenden Halteleisten gebildet, die sich am Anfang der Führungsschienen gegen die Stirnflächen der Stechplatten legen und die am Ende der Führungsschienen die Stirnflächen der Stechplatten freigeben, so daß die mit den Stechdornen versehenen Stechplatten zurück zum Anfang der Führungsschienen transportiert werden können.

Die Stechdorne können von den Speilen selbst gebildet werden. Sie können aber auch von Hohldornen aus Metall gebildet werden, wodurch eine Abstreifvorrichtung erforderlich wird, die während eines jeden Stechhubes die Lebensmittelstücke von einem vollständig bestückten Hohldorn auf einen Speil bzw. von den Hohldornen einer vollständig bestückten Stechdornreihe auf eine Anzahl Speile streift.

Um das Abstreifen der Lebensmittelstücke von den Hohldornen auf die Speile zu ermöglichen, ist eine Speilzuführvorrichtung vorgesehen, die die Speile in die Innenbohrung der vollständig bestückten Hohldorne einführt. Bei jedem Stechhub wird ein vollständig bestückter Hohldorn mit eingeführtem Speil von der Vorschubvorrichtung gegen einen Abstreifrechen geführt, der die Lebensmittelstücke festhält, und der Hohldorn wird aus den Lebensmittelstücken herausgezogen. Damit der Speil beim Herausziehen des Hohldornes aus den Lebensmittelstücken nicht ebenfalls herausgezogen wird, ist eine Klemmvorichtung vorgesehen, die den Speil in seiner Position zum Abstreifrechen fixiert, so daß die Lebensmittelstücke auf den Speil abgestreift werden. Im Falle der auf einer Stechplatte nebeneinanderliegend angeordneten Hohldorne werden alle Hohldorne einer vollständig bestückten Stechdornreihe dem Abstreifrechen zugeführt und alle in diese Hohldorne eingeführten Speile durch die Klemmvorrichtung fixiert.

Die Merkmale der Vorrichtung zur Zuführung der Speile in die Innenbohrungen der Hohldorne ergeben sich aus Patentanspruch 16.

Ein Vorratsbehälter zur Aufnahme der Speile in horizontaler Lage ist oberhalb des Hubrahmens angeordnet. Dieser Vorratsbehälter weist mindestens einen unteren Austrittsschlitz auf, dessen Länge und Breite geringfügig größer sind als die Länge und Breite eines Speiles. Hierdurch wird bewirkt, daß jeweils ein Speil in dem unteren Austrittsschlitz des Vorratsbehälters liegt. Bei der Verwendung von Stechplatten, an denen mehrere Hohldorne befestigt sind, ist es vorteilhaft, daß der Vorratsbehälter eine Anzahl Austrittsschlitze aufweist, die der Anzahl der Hohldorne einer Stechplatte entspricht.

Unterhalb des Vorratsbehälters ist eine verschiebbare Platte angeordnet, die die Austrittsschlitze abdeckt und die mit Aufnahmekerben für je einen Speil versehen ist. Diese Platte wird pro Arbeitshub einmal in der quer zur Erstreckung des Austrittsschlitzes verlaufenden Richtung vor- und zurückgeschoben, wobei die Aufnahmekerben der Platte unter dem Austrittsschlitz des Vorratsbehälters hindurchgleiten und sich jeweils ein Speil in jeweils eine Aufnahmekerbe einfügt.

Nach der Vor- und Zurückbewegung der Platte liegen die Aufnahmekerben mit den Speilen fluchtend zu Aufnahmeöffnungen eines um eine horizontale Achse drehbaren Drehförderers. Die Speile werden aus der Aufnahmekerbe in die Aufnahmeöffnung des Drehförderers geschoben. Der Drehförderer wird um einen gewissen Winkel, z.B. 90°, weitergedreht, so daß die nächste Aufnahmeöffnung in die Aufnahmeposition gebracht wird, in der sie mit der Aufnahmekerbe der Platte fluchtet. Gleichzeitig wird eine andere Aufnahmeöffnung, in der ein Speil aufgenommen ist, in eine vertikale Position gedreht, so daß sich der Speil unterhalb dieser Aufnahmeöffnung erstreckt. Dieser Speil fluchtet mit der Innenbohrung eines darunterliegenden Hohldornes. Die Drehung des Drehförderers erfolgt zu einem Zeitpunkt, zu dem der Stechrahmen in einem unteren Bereich seines Stechhubes ist. Beim anschließenden Rückhub des Stechrahmens mit den daran befestigten Hohldornen wird der mit dem Speil fluchtende Hohldorn über den Speil geschoben, wodurch der Speil in dessen Innenbohrung eingeführt wird. Selbstverständlich sind auch hier im Falle von mehreren an Stechplatten befestigten Hohldornen eine Anzahl von nebeneinanderliegenden Aufnahmeöffnungen an dem Drehförderer vorgesehen, so daß die Innenbohrungen aller Hohldorne einer Stechplatte gleichzeitig mit Speilen bestückt werden.

Nach dem Abstreifen der Lebensmittelstücke von den Hohldornen müssen die Hohldorne bzw. die Stechplatten mit den Hohldornen wieder an den Anfang der Vorschubvorrichtung zurückgeführt werden. Hierfür schließt sich an das Ende der Vorschubvorrichtung eine Rückführvorrichtung an.

Bei Bedarf kann die Rückführvorrichtung durch eine Reinigungsvorrichtung, z. B. durch ein mit einer Reinigungsflüssigkeit befülltes Bad verlaufen, so daß die Hohldorne vor jedem Aufstechzyklus gereinigt werden. Für den Fall, daß die Innenbohrungen der Hohldorne mit geringem Spiel an den Durchmesser der Speile angepaßt sind, werden sämtliche in den Innenbohrungen vorhandenen Lebensmittelreste beim Einführen der Speile herausgedrückt, so daß sich der zusätzliche Reinigungsvorgang während der Produktion erübrigt.

Die Hohldorne sind lediglich bei längeren Unterbrechungen der Produktion zu reinigen.

Im Falle der Verwendung von Stechplatten, an denen mehrere Hohldorne zur Bildung von Stechdornreihen angeordnet sind, kann die Rückführvorrichtung ein Rückführkettenpaar umfassen, welches vom Ende der Gleitschienen zum Anfang der Gleitschienen verläuft. Dabei gleiten die Stechplatten am Ende der Führungsschienen zwischen den vertikalen Halteleisten, die an den Stirnflächen der Stechplatten anliegen, nach unten und fallen auf das Rückführkettenpaar.

Das Rückführkettenpaar führt die Stechplatten einem Hebemittel zu. Das Hebemittel hebt vor jedem Vorschub der vertikalen Halteleisten eine Stechplatte zwischen zwei Halteleisten nach oben, bis die Fürhungsrollen der Stechplatte mit den Führungsschienen fluchten und in die Führungsschienen eingeführt werden. Die an der Stechplatte befestigte Stechdornreihe steht für einen neuen Durchlauf des Vorschubmittels zur Verfügung.

Wie schon bei der Beschreibung des Herstellungsverfahrens angesprochen, ist das Bestückungsband, welches die Lebensmittelstücke in die Stechzone transportiert, mit Mulden zur Aufnahme der Lebensmittelstücke versehen, die je ein mittiges Durchgangsloch aufweisen, welches das Durchstechen der Stechdorne ermöglicht. Vorzugsweise verlaufen die Seitenwände der Mulden trichterförmig, so daß das Lebensmittelstück derart in den Mulden aufgenommen wird, daß das Durchgangsloch in der Mitte des Lebensmittelstückes liegt und ein mittiges Aufstechen des Lebensmittelstückes gewährleistet ist.

Die Mulden zur Aufnahme der verschiedenen Lebensmittelstücke zur Bestückung eines Speiles sollten eine an die Größe und Form des jeweiligen Lebensmittelstückes angepaßte Form aufweisen. Beispielsweise ist die Mulde zur Aufnahme einer Silberzwiebel mit einem kleinen runden Querschnitt zu versehen und die Mulde zur Aufnahme eines Fleischwürfels mit einem großen rechteckigen oder quadratischen Querschnitt.

Vorzugsweise verläuft die Förderrichtung des Bestückungsbandes rechtwinklig zur Vorschubrichtung des Vorschubmittels der Stechvorrichtung. Die Reihen der verschiedenen nebeneinanderliegenden Lebensmittelstücke zur vollständigen Bestückung eines Speiles erstrecken sich dabei in Vorschubrichtung des Vorschubmittels, d. h. rechtwinklig zur Förderrichtung des Bestückungsbandes. Nach jedem Stechhub ist das Bestückungsband um eine Anzahl von Lebensmittelreihen weiterzubewegen, die der Anzahl der nebeneinanderliegenden Hohldorne einer Stechdornreihe entspricht.

Alternativ kann die Förderrichtung des Bestückungsbandes der Vorschubrichtung des Vorschubmittels entsprechen. In diesem Fall ist das Bestückungsband vor jedem Stechhub um eine Länge vorwärtszubewegen, die der Länge der Lebensmittelreihe mit den Lebensmittelstücken zur vollständigen Bestückung eines Speiles entspricht.

Weitere Merkmale der Erfindung ergeben sich aus den Unteransprüchen und der nun folgenden Zeichnungsbeschreibung.

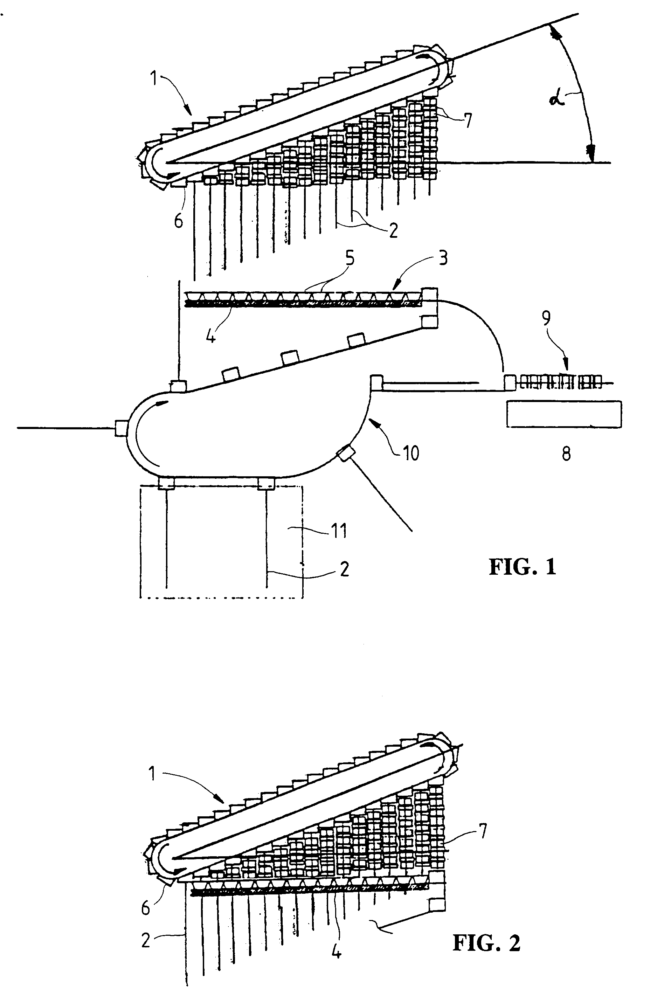

Die Zeichnungen zeigen in:
- Figur 1: die schematische Darstellung einer zur Durchführung des erfindungsgemäßen Verfahrens geeigneten Vorrichtung,
- Figur 2: die schematische Darstellung der Vorrichtung aus Figur 1 mit abgesenkter Stechvorrichtung,
- Figur 3: die Seitenansicht einer Ausführungsform der erfindungsgemäßen Vorrichtung mit mehreren, zu Stechdornreihen zusammengefaßten Hohldornen, die an Stechplatten befestigt sind,
- Figur 4: die Schnittansicht der Vorrichtung entlang der in Figur 3 eingezeichneten Schnittlinie IV - IV,
- Figur 5: die vergrößerte Darstellung einer Stechplatte mit vier, zu einer Stechdornreihe zusammengefaßten Hohldornen
Die in den Figuren 1 und 2 dargestellte Vorrichtung umfaßt eine Stechvorrichtung 1, an der die Stechdorne 2 befestigt sind und eine darunterliegende Fördervorrichtung 3, die durch ein Bestückungsband 4 mit Mulden 5 für die Aufnahme der Lebensmittelstücke gebildet wird und die dazu dient, die Lebensmittelstücke in die Stechzone unterhalb der Stechvorrichtung 1 zu transportieren. Die in Figur 1 dargestellte Reihe nebeneinanderliegender Mulden 5 enthält die verschiedenen Lebensmittelstücke zur vollständigen Bestückung eines Stechdornes 2. Die Mulden 5 weisen ein in Figur 1 nicht dargestelltes mittiges Durchgangsloch auf, welches das Durchstechen je eines Stechdorns 2 ermöglicht. Die Seitenwände der Mulden 5 sind trichterförmig ausgebildet, so daß die Lebensmittelstücke 7 in den Mulden 5 zentriert werden.

Die Stechvorrichtung 1 umfaßt ein in dieser schematischen Darstellung als Transportband dargestelltes Vorschubmittel 6, welches die Stechdorne 2 diskontinuierlich pro Stechhub um den Abstand zwischen zwei Stechdornen 2 verschiebt. Die Vorschubrichtung des Vorschubmittels 6 verläuft rechtwinklig zur Transportrichtung des Bestückungsbandes 4. Außerdem weist die Vorschubrichtung einen Winkel α zu dem horizontal verlaufenden Bestückungsband 4 auf. Der Winkel α ist so ausgelegt, daß die Stechdorne 2 bei einem Vorschub um den Betrag des Abstandes zwischen zwei Stechdornen gleichzeitig um eine festgelegte Strecke angehoben werden. Diese festgelegte Strecke entspricht der mittleren Dicke der Lebensmittelstücke 7. Hierdurch ist gewährleistet, daß das obere Ende der noch nicht mit Lebensmitteln bestückten Abschnitte der Stechdorne 2 im wesentlichen auf einem horizontalen Niveau liegt. Die Hublänge des Stechhubes ist so bemessen, daß am unteren Totpunkt des Stechhubes die neu aufgestochenen Lebensmittelstücke 7 an die darüberliegenden angrenzen. Daraus folgt, daß der Wirkanteil eines jeden Stechhubes dem Abstand der Endposition des Lebensmittelstückes 7 von der Spitze des Stechdornes 2 entspricht, das heißt, daß jedes Lebensmittelstück einzeln auf den Stechdorn bis in die vorgesehene Endposition aufgeschoben wird.

In der Figur 2 ist die Stechvorrichtung 1 während des Stechhubes in der Nähe ihres unteren Totpunktes dargestellt. In dieser Position stechen die Stechdorne 2 die in den Mulden 5 angeordneten Lebensmittelstücke auf. Gleichzeitig wird am Anfang des Vorschubmittels 6 ein leerer Stechdorn 2 befestigt und am Ende des Vorschubmittels 6 ein vollständig bestückter Stechdorn entnommen. Wie aus Figur 1 ersichtlich, wird der vollständig bestückte Stechdorn 2 einer Transportvorrichtung 8 zugeführt, die die so hergestellten Lebensmittelspieße 9 zur Weiterverarbeitung und Verpackung abtransportiert.

Wie in den Figuren 1 und 2 erkennbar ist, enden die auf die nebeneinanderliegenden Stechdorne 2 aufgestochenen Lebensmittelstücke 7 nicht exakt auf einem horizontalen Niveau. Dadurch werden bei dem nächsten Stechhub entweder einzelne Lebensmittelstücke 7 um einen geringen Betrag nach oben verschoben bzw. zusammengedrückt oder es entstehen Lücken zwischen zwei aufeinanderfolgenden Lebensmittelstücken 7 auf einem Stechdorn 2. Durch das Zusammendrücken der Lebensmittelstücke 7 um einen geringen Betrag können die Lebensmittel jedoch nicht beschädigt werden. Das Entstehen von Unregelmäßigkeiten und kleinen Lücken zwischen den einzelnen Lebensmittelstücken 7 ist ebenfalls nicht nachteilig, da hierdurch die Lebensmittelspieße 9 eine etwas unregelmäßgie Gestalt erhalten, die der Gestalt eines manuell bestückten Lebensmittelspießes entspricht.

Unterhalb der Fördervorrichtung 3 ist eine Rückführvorrichtung 10 für das Rückführen der Stechdorne 2 zum Anfang des Vorschubmittels 6 vorgesehen. Die Rückführungsvorrichtung 10 ist insbesondere dann notwendig, wenn die Stechdorne 2 von Hohldornen gebildet und die Lebensmittelstücke 7 nach dem Aufstechen von den Hohldornen auf die Speile abgestreift werden. Zur Reinigung der Stechdorne 2 verläuft die Rückführvorrichtung 10 durch eine Reinigungsvorrichtung 11, die hier durch einen mit einer Reinigungsflüssigkeit gefüllten Behälter gebildet wird. Wie insbesondere in Figur 2 zu erkennen ist, wird im unteren Totpunkt eines jeden Stechhubes ein leerer Stechdorn 2 an dem Anfang des Vorschubmittels 6 befestigt. Die Rückführvorrichtung 10 und die Reinigungsvorrichtung 11 sind in der Figur 2 nicht dargestellt.

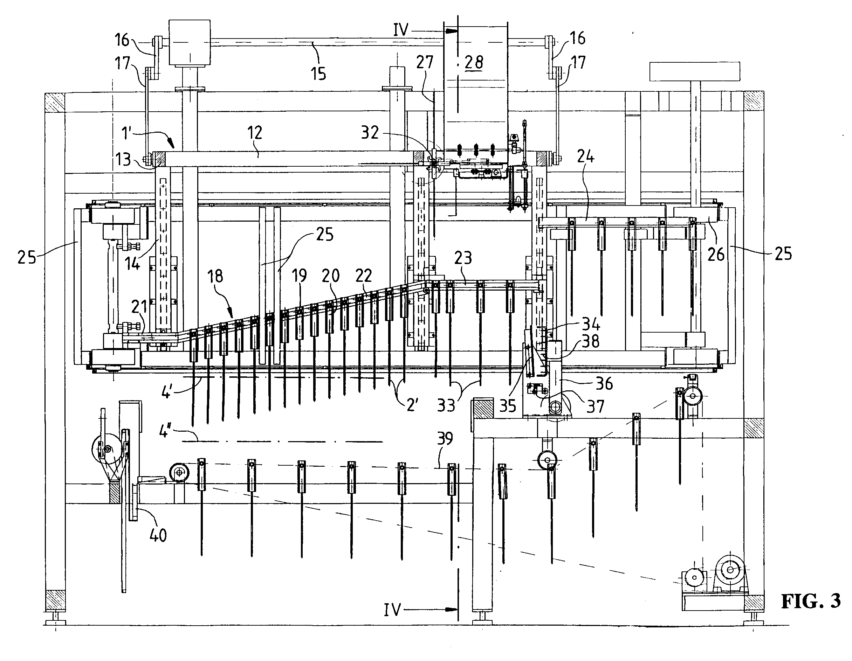

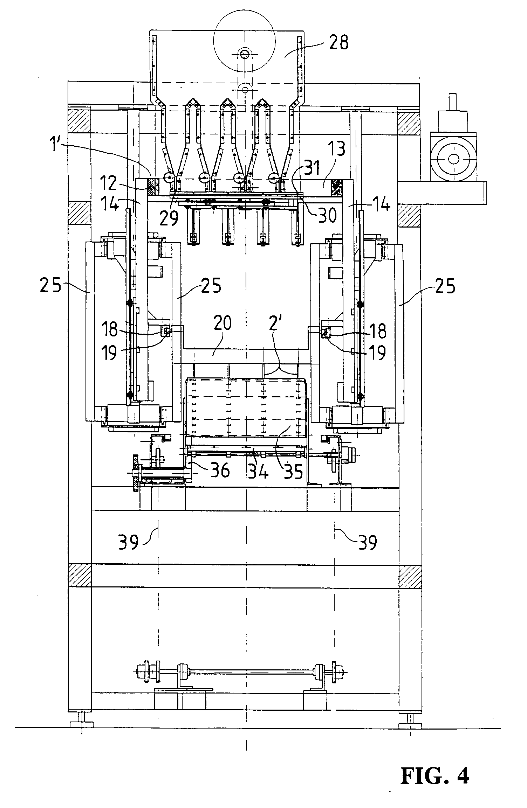

In den Figuren 3 und 4 ist die konstruktive Ausgestaltung einer Maschine zur Durchführung des erfindungsgemäßen Verfahrens dargestellt. Um die Übersichtlichkeit der Zeichnungen zu wahren, ist das Bestückungsband 4 mit den Mulden 5 zur Aufnahme der Lebensmittelstücke 7 nur schematisch durch strichpunktierte Linien dargestellt. Die obere strichpunktierte Linie deutet die Lage des mit Lebensmittelstücken 7 bestückten Lasttrums 4' des Bestückungsbandes an und die untere strichpunktierte Linie kennzeichnet die Lage des Leertrums 4'' des Bestückungsbandes.

Die Stechvorrichtung 1' umfaßt einen aus Längsstreben 12, Querstreben 13 und Vertikalstreben 14 bestehenden Hubrahmen. Der Hubrahmen wird von einem Kurbelantrieb angetrieben. An den Enden einer Antriebswelle 15 sind zwei Kurbelarme 16 angeordnet, welche über mit den Querstreben 13 verbundene Hubstangen 17 den Hubrahmen absenken und anheben und so den Stechhub mit dem dazugehörigen Rückhub bewirken.

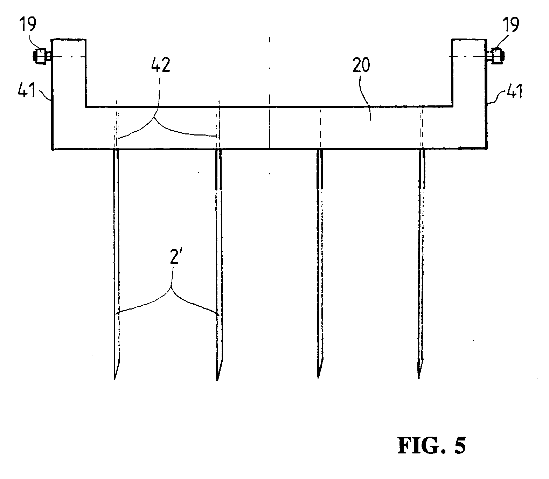

Im unteren Bereich des Hubrahmens sind zwei einander gegenüberliegende Führungsschienen 18 angeordnet. In den Führungsschienen 18 werden Führungsrollen 19 geführt, die an den Seitenflächen von Stechplatten 20 angeordnet sind, welche vier nebeneinanderliegende Hohldorne 2' zur Bildung der Stechdorne aufweisen. Die Ausgestaltung der Stechplatten 20 mit den Hohldornen 2' ist in Figur 5 vergrößert dargestellt. Die Führungsschienen 18 weisen einen ersten geraden Abschnitt 21, einen zweiten im Winkel α zur Horizontalen geneigten Abschnitt 22, der oberhalb der Stechzone liegt und einen dritten geraden Abschnitt 23 auf. An den dritten geraden Abschnitt 23 schließt sich ein fester Führungsschienenabschnitt 24 an, der starr mit dem Maschinenrahmen verbunden ist und nicht der Hubbewegung folgt.

In den geraden Abschnitten 21, 23, 24 der Führungsschiene 18 sind aus Gründen der Übersichtlichkeit nicht alle Stechplatten 20 dargestellt. Im Produktionsbetrieb sind die Stechplatten 20 gleichmäßig in den kurzen Abständen, die entlang des geneigten Führungsschienenabschnitts 22 dargestellt sind, über die gesamte Länge der Führungsschiene 18 verteilt.

Zu beiden Seiten der Führungsschienen 18 verlaufen in Vorschubrichtung umlaufende vertikale Halteleisten 25, welche die Vorschubbewegung der Stechplatten 20 bewirken. Nach jedem Stechhub werden die vertikalen Halteleisten 25 von Antriebsrollen 26 um den Betrag des Abstandes zwischen zwei Stechplatten 20 in Vorschubrichtung verschoben. Mittels dieser Halteleisten 25 werden die an den Stechplatten 20 befestigten Hohldorne 2' in ihrer vertikalen Lage gehalten, so daß sie beim Einstechen in die Lebensmittelstücke nicht verschwenken können. Aus Gründen der Übersichtlichkeit sind in den Figuren 3 und 4 nur einige der vertikalen Halteleisten 25 dargestellt.

In den Figuren 3 und 4 ist der Hubrahmen in seinem unteren Totpunkt dargestellt. Die Hohldorne 2' von dreizehn aufeinanderfolgenden Stechplatten 20 in dem geneigten Abschnitt 22 der Führungsschienen 18 durchragen in diesem unteren Totpunkt den Lasttrum 4' des Bestückungsbandes 4 und stechen so beim Produktionsablauf je ein Lebensmittelstück auf. Die Lebensmittelstücke sind in den Figuren 3 und 4 ebenfalls nicht dargestellt. Da an jeder Stechplatte 20 vier Hohldorne 2' nebeneinander angeordnet sind, werden pro Stechhub 52 Lebensmittelstücke aufgestochen.

Nach dem Eintreten der Stechplatte 20 in den geraden Führungsschienenabschnitt 23 werden die Speile 27 in die Innenbohrungen der Hohldorne 2' eingeführt. Die Speile 27 befinden sich zunächst in horizontaler Lage in einem oberhalb der Führungsschienen 18 angeordneten Vorratsbehälter 28, welcher vier Austrittsschlitze 29 aufweist, die zur Aufnahme jeweils eines Speiles 27 geeignet sind. Die Austrittsschlitze 29 werden von einer Platte 30 abgedeckt, welche parallel zu den Austrittsschlitzen 29 verlaufende Aufnahmekerben 31 aufweist und welche in der quer zu den Aufnahmekerben 31 verlaufenden Richtung verschiebbar ist. Während eines Stechhubes wird die Platte 30 einmal vor- und zurückverschoben, so daß jede Aufnahmekerbe 31 eine Austrittsöffnung 29 des Vorratsbehälters überstreift und sich genau ein Speil 27 in die Aufnahmekerbe 31 einfügt.

Die in den Aufnahmekerben 31 befindliche Speile 27 fluchten mit den Aufnahmeöffnungen eines Drehförderers 32, in welche sie eingefügt werden. Der nur in Figur 3 dargestellte Drehförderer 32 weist 4 mit Aufnahmeöffnungen versehene Aufnahmehülsen auf, die kreuzförmig um eine waagerechte Drehachse drehbar angeordnet sind. Vier derartige Drehförderer 32 sind nebeneinander angeordnet, so daß jeder Drehförderer 32 die Speilzufuhr für je einen der an einer Stechplatte 20 befestigten Hohldorne 2' bewirkt. Wenn sich der Hubrahmen im Bereich seiner unteren Totpunktstellung befindet, drehen sich die Drehförderer 32 um 90°, so daß jeweils ein Speil 27 über jedem vollständig mit Lebensmittelstücken bestückten Hohldorn 2' der Stechplatte 20, die beim letzten Vorschub in den geraden Abschnitt 23 der Führungsschiene 18 eingeschoben wurde, positioniert wird. Beim Rückhub des Hubrahmens werden die Hohldorne 2' der Stechplatten 20 über die vertikal über ihnen gehaltenen Speile 27 geschoben, so daß sich die Speile 27 in die Innenbohrungen der Hohldorne 2' einfügen. Ein unterer Endabschnitt 33 der Speile 27 ragt anschließend aus der unteren Spitze jedes Hohldorns 2' heraus.

Am Ende des geraden Abschnitts 23 der Führungsschiene 18 ist ein Abstreifrechen 34 angeordnet, der mit einer Gegenplatte 35 zusammenwirkt. Der Abstreifrechen 34 ist mit zwei Schwenkarmen 36 schwenkbar am Gestell der Maschine befestigt. Bei einer Vorschubbewegung im oberen Totpunkt des Hubrahmens passiert eine Stechplatte 20 die Position der Gegenplatte 35, so daß die an dieser Stechplatte 20 befestigten Hohldorne 2' mit den darauf aufgestochenen Lebensmittelstücken beim folgenden Stechhub in Vorschubrichtung hinter der Gegenplatte 35 liegen.

Im unteren Totpunkt dieses folgenden Stechhubes klemmt eine Klemmvorrichtung 37 die unteren Endabschnitte der Speile 27 ein, die in die nebeneinanderliegenden Hohldorne 2' der Stechplatte 20 eingeschoben sind. Gleichzeitig schwenkt der Abstreifrechen 34 nach oben und fixiert die auf den Hohldornen 2' der Stechplatte 20 aufgestochenen Lebensmittelstücke. Hierzu ist der Abstreifrechen 34 mit Dornen 38 versehen, die in die Lebensmittelstücke eindringen. Beim Rückhub des Hubrahmens wird die Stechplatte 20 nach oben gehoben, wobei die Hohldorne 2' aus den zwischen Abstreifrechen 34 und Gegenplatte 35 fixierten Lebensmittelstücken herausgezogen werden. Die Speile 27 verharren ebenfalls in der unteren Position, da sie durch die Klemmvorrichtung 37 fixiert sind. Nach dem Herausziehen der Hohldorne 2' aus den Lebensmittelstücken schwenkt der Abstreifrechen 34 in die horizontale Position zurück und übergibt die Lebensmittelspieße einer Transportvorrichtung, welche in den Figuren 3 und 4 nicht dargestellt ist.

In der oberen Totpunktstellung des Hubrahmens fluchtet der gerade Führungsschienenabschnitt 23 mit dem festen Führungsschienenabschnitt 24. Die Stechplatte 20, von der beim vorangehenden Rückhub die Lebensmittelstücke abgestriffen wurden, wird beim folgenden Vorschub auf den festen Führungsschienenabschnitt 24 aufgeschoben, welcher die Stechplatten 20 über die Vorrichtung zum Abtransport des Lebensmittelspieße hinwegleitet.

Am Ende des festen Führungsschienenabschnitts 24 gleiten die Stechplatten 20 unter ihrer Gewichtskraft zwischen den vertikalen Halteleisten 25 nach unten und fallen auf ein strichpunktiert dargestelltes Rückführkettenpaar 39. Das Rückführkettenpaar 39 bewegt sich entgegen der Vorschubrichtung der vertikalen Halteleisten 25. Am Ende des Rückführkettenpaares 39 ist ein Hebemittel 40 angeordnet, welches pro Stechhub eine Stechplatte 20 zwischen zwei vertikale Halteleisten 25 schiebt. Die Halteleisten 25 bewirken bei ihrer folgenden Vorschubbewegung das Einschieben der Führungsrollen 19 der Stechplatte 20 in den ersten geraden Abschnitt 21 der Führungsschienen 18.

In der Figur 5 ist eine vergrößerte Darstellung einer Stechplatte 20 mit vier nebeneinanderliegenden Hohldornen 2' und an den Seitenflächen 41 befestigten Führungsrollen 19 dargestellt. Es ist zu erkennen, daß die unteren Enden der Hohldorne 2' angespitzt sind. Wie oben dargestellt, werden die Speile 27 von oben in die Innenbohrungen der Hohldorne 2' eingeführt. Aus diesem Grund weist die Stechplatte 20 Durchgangsbohrungen 42 auf, welche mit den Innenbohrungen der Hohldorne 2' fluchten.

Die beschriebenen Zeichnungen stellen nur eine Ausführungsform einer Maschine zur Durchführung des erfindungsgemäßen Verfahrens dar.

### Bezugszeichenliste:

- 1: Stechvorrichtung
- 1': Stechvorrichtung
- 2: Stechdorn
- 2': Hohldorn
- 3: Fördervorrichtung
- 4: Bestückungsband
- 4': Lasttrum
- 4'': Leertrum
- 5: Mulden
- 6: Vorschubmittel
- 7: Lebensmittelstück
- 8: Transportvorrichtung
- 9: Lebensmittelspieß
- 10: Rückführvorrichtung
- 11: Reinigungsvorrichtung
- 12: Längsstrebe
- 13: Querstrebe
- 14: Vertikalstrebe
- 15: Antriebswelle
- 16: Kurbelarm
- 17: Hubstange
- 18: Führungsschiene
- 19: Führungsrollen
- 20: Stechplatte
- 21: gerader Führungsschienenabschnitt
- 22: geneigter Führungsschienenabschnitt
- 23: gerader Führungsschienenabschnitt
- 24: fester Führungsschienenabschnitt
- 25: vertikale Halteleiste
- 26: Antriebsrolle
- 27: Speil
- 28: Vorratsbehälter
- 29: Austrittsschlitz
- 30: Platte
- 31: Aufnahmekerbe
- 32: Drehförderer
- 33: unterer Endabschnitt
- 34: Abstreifrechen
- 35: Gegenplatte
- 36: Schwenkarm
- 37: Klemmvorrichtung
- 38: Dorn
- 39: Rückführkettenpaar
- 40: Hebemittel
- 41: Seitenfläche
- 42: Durchgangsbohrung

## Patentansprüche

1. Verfahren zur automatischen Produktion von mit Lebensmitteln bestückten Speilen, bei dem die Lebensmittelstücke (7) mit einer Fördervorrichtung (3) in eine Stechzone transportiert und dort von mindestens einem einen Stechhub relativ zur Fördervorrichtung (3) ausführenden, an einer Stechvorrichtung (1, 1') befestigten Stechdorn (2, 2') aufgestochen werden, wobei die Stechvorrichtung (1, 1') periodische Stechhübe mit gleichem Hubbetrag ausführt,
**dadurch gekennzeichnet**, daß
a) vor jedem Stechhub eine Anzahl verschiedener Lebensmittelstücke (7), in einer Reihe nebeneinanderliegend in die Stechzone transportiert wird,
b) mehrere Stechdorne (2,2') in regelmäßigen Abständen zueinander an einem in Richtung der Lebensmittelreihen verlaufenden Vorschubmittel (6, 18 und 25) der Stechvorrichtung (1,1') befestigt werden, wobei die Stechvorrichtung (1,1') oberhalb der Fördervorrichtung (3) für die Lebensmittelstücke (7) angeordnet ist und
c) das Vorschubmittel (6, 18 und 25) nach jedem Stechhub einen Vorschub der Stechdorne (2,2') um den Betrag des Stechdornabstandes bewirkt, wodurch eine Vergrößerung des Abstandes zwischen jedem Stechdorn (2,2') und der Fördervorrichtung (3) um den Betrag der mittleren Dicke der Lebensmittelstücke (7) erfolgt.

2. Verfahren nach Anspruch 1, **dadurch gekennzeichnet**, daß während eines jeden Stechhubes ein Stechdorn (2,2') am Anfang des Vorschubmittels (6, 18 und 25) befestigt wird und ein Stechdorn (2,2') am Ende des Vorschubmittels (6, 18 und 25) entnommen wird.

3. Verfahren nach Anspruch 1 oder 2, **dadurch gekennzeichnet**, daß die Anzahl der Lebensmittelstücke in einer Reihe der Bestückung eines Speiles (27) entspricht.

4. Verfahren nach mindestens einem der Ansprüche 1 bis 3, **dadurch gekennzeichnet**, daß die Lebensmittelstücke (7) auf eine horizontal verlaufende Fördervorrichtung (3) aufgelegt werden, die als Bestückungsband (4) mit Mulden (5) für die Aufnahme der Lebensmittelstücke (7) ausgebildet ist, wobei die Mulden (5) je ein mittiges Durchgangsloch aufweisen, welches das Durchstechen eines Stechdornes (2,2') ermöglicht.

5. Verfahren nach Anspruch 3, **dadurch gekennzeichnet,** daß eine Anzahl von Stechdornen (2,2') zu Stechdornreihen zusammengefaßt sind, die quer zur Vorschubrichtung verlaufend und in regelmäßigen Abständen zueinander an dem Vorschubmittel (6, 18 und 25) der Stechvorrichtung (1,1') befestigt werden, wobei während eines jeden Stechhubes eine Stechdornreihe am Anfang des Vorschubmittels (6, 18 und 25) befestigt und eine Stechdornreihe am Ende des Vorschubmittels (6, 18 und 25) entnommen wird.

6. Verfahren nach mindestens einem der vorangehenden Ansprüche, **dadurch gekennzeichnet**, daß die Speile (27) selbst zur Bildung der Stechdorne (2) an der Stechvorrichtung (1,1') befestigt werden.

7. Verfahren nach mindestens einem der vorangehenden Ansprüche, **dadurch gekennzeichnet**, daß Hohldorne (2') aus Metall zur Bildung der Stechdorne an der Stechvorrichtung (1,1') befestigt werden und während eines jeden Stechhubes die Lebensmittel von einem vollständig bestückten Hohldorn (2') auf einen Speil (27) bzw. von den Hohldornen (2') einer vollständig bestückten Stechdornreihe auf eine Anzahl Speile (27) gestreift werden.

8. Vorrichtung zur Durchführung des Verfahrens nach mindestens einem der vorangehenden Ansprüche, **dadurch gekennzeichnet**, daß sie als Fördervorrichtung (3) ein horizontal verlaufendes Bestückungsband (4,4',4'') aufweist, über dem in der Stechzone ein die Stechvorrichtung (1') bildender Hubrahmen (12,13,14) angeordnet ist, der mit einem den vertikalen Stechhub des Hubrahmens (12,13,14) bewirkenden Antrieb (15,16,17) verbunden ist und der mit einem die Stechdorne (2,2') in vertikaler Lage und in regelmäßigen Abständen zueinander haltenden Vorschubmittel (18 und 25) zusammenwirkt, welches in Vorschubrichtung zum Bestückungsband (4,4',4'') um einen Winkel (α) nach oben geneigt ist, wobei das Vorschubmittel (18 und 25) mit einem Antrieb (26) verbunden ist, der zwischen zwei Stechhüben den Vorschub der Stechdorne (2,2') um einen dem Stechdornabstand entsprechenden Vorschubweg bewirkt und wobei der Winkel (α) derart gewählt ist, daß der Abstand zwischen dem Bestückungsband (4,4',4'') und den Stechdornen (2,2') über die Strecke eines Vorschubweges um den Betrag der mittleren Dicke der Lebensmittelstücke ansteigt.

9. Vorrichtung nach Anspruch 8, **dadurch gekennzeichnet**, daß eine Anzahl von Stechdornen (2,2') zur Bildung der Stechdornreihen an Stechplatten (20) befestigt sind, welche an dem Vorschubmittel (18 und 25) quer zur Vorschubrichtung verlaufend und in regelmäßigen Abständen zueinander befestigbar sind.

10. Vorrichtung nach Anspruch 8 oder 9, **dadurch gekennzeichnet**, daß der Winkel (α) zwischen dem Vorschubmittel (6, 17 und 24) und dem Bestückungsband (4,4',4'') zur Anpassung an die mittlere Lebensmittelstückdicke einstellbar ist.

11. Vorrichtung nach mindestens einem der Ansprüche 8 bis 10, **dadurch gekennzeichnet,** daß das Vorschubmittel in gleichmäßigen Abständen angeordnete, schaltbare Haltekupplungen (25) zur lösbaren Aufnahme der Stechdorne (2,2') aufweist.

12. Vorrichtung nach Anspruch 11, **dadurch gekennzeichnet,** daß das Vorschubmittel in Vorschubrichtung verlaufende Führungsschienen (18) umfaßt, in die an den Seitenflächen (42) der Stechplatten (20) angeordnete Führungsrollen (19) einfügbar sind, und daß die Haltekupplungen des Vorschubmittels von in Vorschubrichtung angetriebenen, vertikalen Halteleisten (25) gebildet werden, die sich am Anfang der Führungsschienen (18) gegen die Stirnflächen der Stechplatten (20) legen und die am Ende der Führungsschienen (18) die Stirnflächen der Stechplatten (20) freigeben.

13. Vorrichtung nach mindestens einem der Ansprüche 8 bis 12, **dadurch gekennzeichnet,** daß die Stechdorne (2,2') von den Speilen (27) selbst gebildet werden.

14. Vorrichtung nach mindestens einem der Ansprüche 8 bis 12, **dadurch gekennzeichnet,** daß die Stechdorne von Hohldornen (2') aus Metall gebildet werden und eine Abstreifvorrichtung (34-38) vorgesehen ist, die während eines jeden Stechhubes die Lebensmittel von einem vollständig bestückten Hohldorn (2') auf einen Speil (27) bzw. von den Hohldornen (2') einer vollständig bestückten Stechdornreihe auf eine Anzahl Speile (27) streift.

15. Vorrichtung nach Anspruch 14, **gekennzeichnet durch**
a) eine Speilzuführvorrichtung (28-32), die die Speile (27) in die Innenbohrung der vollständig bestückten Hohldorne (2') einführt,
b) einen Abstreifrechen (34), der bei jedem Stechhub die Lebensmittelstücke von einem vollständig bestückten Hohldorn (2') bzw. den Hohldornen (2') einer vollständig bestückten Stechdornreihe abstreift und
c) einer Klemmvorrichtung (37), die beim Abstreifen der Lebensmittelstücke den in den vollständig bestückten Hohldorn (2') eingeführten Speil (27) in seiner Position zum Abstreifrechen (34) fixiert.

16. Vorrichtung nach Anspruch 15, **dadurch gekennzeichnet**, daß die Speilzuführvorrichtung die folgenden Elemente umfaßt:
a) einen Vorratsbehälter (28) zur Aufnahme der Speile (27) in horizontaler Lage mit mindestens einem unteren Austrittsschlitz (29),
b) einer unterhalb des Vorratsbehälters (28) angeordneten, den Austrittsschlitz (29) abdeckenden und verschiebbaren Platte (30), mit Aufnahmekerben (31) für je einen Speil (27),
c) einen oberhalb der Stechvorrichtung (1') angeordneten, um eine horizontale Achse drehbaren Drehförderer (32) mit Aufnahmeöffnungen für je einen Speil (27), wobei die Aufnahmeöffnungen in einer horizontalen Aufnahmeposition mit je einer Aufnahmekerbe (31) der Platte (30) fluchten, so daß der in der Aufnahmekerbe (31) liegende Speil (27) in die Aufnahmeöffnung schiebbar ist, und wobei die Aufnahmeöffnungen nach einer Drehung des Drehförderers (32) um einen Winkel von 270° in einer vertikalen Zufuhrposition mit der Innenbohrung je eines Hohldornes (2') fluchten, so daß der Speil (27) beim Rückhub der Stechvorrichtung (1') in diese Innenbohrung eingeführt wird.

17. Vorrichtung nach mindestens einem der Ansprüche 8 bis 16, **dadurch gekennzeichnet**, daß sie eine sich an das Ende der Vorschubvorrichtung (6, 18 und 25) anschließende Rückführvorrichtung (10, 39) für die Hohldorne (2') umfaßt.

18. Vorrichtung nach Anspruch 17, **dadurch gekennzeichnet,** daß die Rückführvorrichtung (10) durch eine Reinigungsvorrichtung (11) zum Reinigen der Hohldorne (2') verläuft.

19. Vorrichtung nach Anspruch 17 oder 18, **dadurch gekennzeichnet**, daß die Rückführvorrichtung ein unterhalb der Fördervorrichtung angeordnetes Rückführkettenpaar (39) umfaßt, wobei die Stechplatten (20), welche die Hohldorne (2') aufweisen, am Ende der Führungsschienen (18) zwischen den vertikalen Halteleisten (25) nach unten gleiten und auf den Anfang des Rückführkettenpaares (39) fallen, und daß am Ende des Rückführkettenpaares (39) ein Hebemittel (40) angeordnet ist, das die Stechplatten (20) zwischen den vertikalen Halteleisten (25) nach oben auf die Höhe des Anfanges der Führungsschienen (18) hebt.

20. Vorrichtung nach mindestens einem der Ansprüche 8 bis 19, **dadurch gekennzeichnet**, daß das Bestückungsband (4) mit Mulden (5) zur Aufnahmen der Lebensmittelstücke (7) versehen ist, die je ein mittiges Durchgangsloch aufweisen, welches das Durchstechen der Stechdorne (2,2') ermöglicht.

21. Vorrichtung nach Anspruch 20, **dadurch gekennzeichnet**, daß die Mulden (5) zur Zentrierung der Lebensmittelstücke trichterförmige Seitenwände aufweisen.

22. Vorrichtung nach Anspruch 20 oder 21, **dadurch gekennzeichnet,** daß die Mulden (5) zur Aufnahme der verschiedenen Lebensmittelstücke (7) zur Bestückung eines Speiles eine an die Größe und Form des jeweiligen Lebensmittelstückes (7) angepaßte Form aufweisen.

23. Vorrichtung nach einem der Ansprüche 8 bis 22, **dadurch gekennzeichnet**, daß die Förderrichtung des Bestückungsbandes (4,4',4'') rechtwinklig zur Vorschubrichtung des Vorschubmittels (6 bzw. 18 und 25) der Stechvorrichtung (1 bzw. 1') verläuft.

## Claims

1. A process for the automatic production of food-containing spiles where the pieces of food (7) are transported to a piercing zone by means of a conveying device (3) and where these pieces of food (7) are pierced by at least one spike (2, 2') which performs a piercing stroke relative to the conveying device (3) and which is secured on a piercing device (1, 1') which periodically performs piercing strokes of the same stroke,
**characterized by the fact** that:
a) before every piercing stroke, several different pieces of food (7) arranged side by side and next to each other are transported into the piercing zone,
b) multiple spikes (2, 2') are secured, with an equidistant spacing relative to each other, on a feeding device (6, 18 and 25) of the piercing device (1, 1') where the feeding device (6, 18 and 25) moves towards the rows of the pieces of food and where the piercing device (1, 1') is arranged above the conveying device (3) for the pieces of food (7), and
c) after every piercing stroke, the feeding device (6, 18 and 25) advances the spikes (2, 2') by the amount of the distance between these spikes (2, 2'), so that the distance between each spike (2, 2') and the conveying device (3) is increased by the amount of the average thickness of the pieces of food (7).

2. A process as described under claim 1, **characterized by the fact** that a spike (2, 2') is secured on the head end of the feeding device (6, 18 and 25) during every piercing stroke and that a spike (2, 2') is removed from the tail end of the feeding device (6, 18 and 25) during every piercing stroke.

3. A process as described under claims 1 or 2, **characterized by the fact** that the number of pieces of food in a row corresponds to the pieces of food attached to one spile (27).

4. A process as described under at least one of the claims 1 to 3, **characterized by the fact** that the pieces of food (7) are placed on a conveying device (3) which moves horizontally where the conveying device (3) is designed as a placement conveyor (4) with recesses (5) for the pieces of food (7) and where each of the recesses (5) has a central through-hole which permits the piercing through of a spike (2, 2').

5. A process as described under claim 3, **characterized by the fact** that several spikes (2, 2') are combined to form rows of spikes (2, 2') which are secured, perpendicular to the feeding direction and with an equidistant spacing relative to each other, on the feeding device (6, 18 and 25) of the piercing device (1, 1') where one row of spikes is secured on the head end of the feeding device (6, 18 and 25) during every piercing stroke and where one row of spikes is removed from the tail end of the feeding device (6, 18 and 25) during every piercing stroke.

6. A process as described under at least one of the claims heretobefore, **characterized by the fact** that the spiles (27) themselves are secured on the piercing device in order to form the spikes (2).

7. A process as described under at least one of the claims heretobefore, **characterized by the fact** that hollow metal spikes (2') are secured on the piercing device (1, 1') in order to form the spikes where, during every piercing stroke, the pieces of food are wiped off a fully laden hollow spike (2') to a spile (27) or from the hollow spikes (2') of a fully laden row of spikes to a number of spiles (27).

8. A device for the performance of the process as described under at least one of the claims heretobefore, **characterized by the fact** that its conveying device (3) is designed as a horizontally moving placement conveyor (4, 4', 4'') above which a lifting frame (12, 13, 14) which constitutes the piercing device (1') is arranged in the piercing zone where this lifting frame (12, 13, 14) is connected to a drive which generates its vertical piercing stroke and where the lifting frame (12, 13, 14) interacts with a feeding device (18 and 25) which keeps the spikes (2, 2') in a vertical position and with an equidistant spacing relative to each other and where the feeding device (18 and 25) is inclined upwards by an angle (α) in the feeding direction towards the placement conveyor (4, 4', 4''), where the feeding device (18 and 25) is connected to a drive (26) which, between two piercing strokes, advances the spikes (2, 2') by a distance which corresponds to the spacing between the spikes where the angle (α) is chosen in such a manner that the distance between the placement conveyor (4, 4', 4'') and the spikes (2, 2') increases, over the length of one feeding stroke, by the amount of the average thickness of the pieces of food.

9. A device as described under claim 8, **characterized by the fact** that several spikes (2, 2') for the formation of the rows of spikes are secured on piercing plates (20) which can be secured on the feeding device (18 and 25) perpendicular to the feeding direction and with an equidistant spacing relative to each other.

10. A device as described under claim 8 or 9, **characterized by the fact** that the angle (α) between the feeding device (6, 17 and 24) and the placement conveyor (4, 4', 4'') can be adjusted to the average thickness of the pieces of food.

11. A device as described under at least one of the claims 8 to 10 heretobefore, **characterized by the fact** that the feeding device is fitted with equally spaced, switchable grippers (25) for the non-permanent fixing of the spikes (2, 2').

12. A device as described under claim 11, **characterized by the fact** that the feeding device includes guide rails (18) which run in the feeding direction and into which guide rollers (19) can be introduced which are arranged at the side faces of the piercing plates (20) where the grippers (25) of the feeding device are formed by vertical holding bars (25) which are driven in the feeding direction and where these vertical holding bars (25) touch the faces of the piercing plates (20) at the beginning of the guide rails (18) and release the faces of the piercing plate (20) at the end of the guide rails (18).

13. A device as described under at least one of the claims 8 to 12, **characterized by the fact** that the spikes (2, 2') are formed by the spiles (27) themselves.

14. A device as described under at least one of the claims 8 to 12, **characterized by the fact** that the spikes consist of hollow metal spikes (2') where a stripping device (34-38) exists which, during every piercing stroke, wipes the pieces of food off a fully laden hollow spike (2') to a spile (27) or from the hollow spikes (2') of a fully laden row of spikes to a number of spiles (27).

15. A device as described under claim 14, **characterized by**:
a) a spike feeding device (28-32) which introduces the spiles (27) into the inner bore of the fully laden hollow spikes (2'),
b) a stripper (34) which, during every piercing stroke, wipes the pieces of food off a fully laden hollow spike (2') or from the hollow spikes (2') of a fully laden row of spikes to a number of spikes, and
c) a clamping device (37) which, when the pieces of food are wiped off, secures the spile (27) introduced into the fully laden hollow spike (2') in its position relative to the stripper (34).

16. A device as described under claim 15, **characterized by the fact** that the spile feeding device includes the following elements:
a) a bin (28) for the spiles (27) in a horizontal position with at least one discharging slot (29) at its bottom,
b) a moveable plate (30) with notches (31) for one spile (27) per notch where this moveable plate (30) is arranged underneath the bin (28) and covers the discharging slot (29),
c) a rotary conveyor (32) which is arranged above the piercing device (1') and which can be turned around a horizontal axis where this rotary conveyor (32) has openings capable of receiving one spile (27) per opening and where these openings, when in a horizontal receiving position, are in alignment with always one notch (31) of the plate (30), so that the spile (27) can be pushed from the notch (31) into the opening, and where the openings, after the rotary conveyor (32) has been turned through an angle of 270° and after the openings have reached a vertical feeding position, are in alignment with the inner bore of always one hollow spike (2'), so that the spile (27) is introduced into this inner bore during the return stroke of the piercing device (1').

17. A device as described under at least one of the claims 8 to 16, **characterized by the fact** that it includes a return device (10, 39) for the hollow spikes (2') which connects to the tail end of the feeding device (6, 18 and 25).

18. A device as described under claim 17, **characterized by the fact** that the return device (10) runs through a cleaning device (11) which cleans the hollow spikes (2').

19. A device as described under claim 17 or 18, **characterized by the fact** that the return device includes a pair of return chains (39) arranged underneath the conveying device, where the piercing plates (20) with the hollow spikes (2') slide downwards at the end of the guide rails (18) between the vertical grippers (25) and fall onto the beginning of the pair of return chains (39) and where the end of the pair of return chains (39) is fitted with a lifting device (40) which lifts the piercing plates between the vertical grippers (25) to the level of the beginning of the guide rails (18).

20. A device as described under at least one of the claims 8 to 19, **characterized by the fact** that the placement conveyor (4) has recesses (5) for the pieces of food (7), where each of the recesses (5) has a central through-hole which permits the piercing through of the spikes (2, 2').

21. A device as described under claim 20, **characterized by the fact** that the recesses (5) have funnel-shaped side walls for the centering of the pieces of food.

22. A device as described under claim 20 or 21, **characterized by the fact** that the shape of the recesses (5) for the different pieces of food (7) for the loading of a spile is adjusted to the size and shape of the specific piece of food (7).

23. A device as described under any of the claims 8 to 21, **characterized by the fact** that the conveying direction of the placement conveyor (4, 4', 4'') runs perpendicular to the feeding direction of the feeding device 6 or 18 and 25) of the piercing device (1 or 1', resp.).

## Revendications

1. Un procédé destiné à la fabrication automatique de chevilles garnies d'aliments dans le cadre duquel les morceaux d'aliments (7) sont transportés à l'aide d'un dispositif de transport (3) dans une zone de piquage où ils sont piqués par au moins une broche de piquage (2,2') fixée sur un dispositif de piquage(1, 1'), ce dernier effectuant une course de piquage par rapport au dispositif de transport (3). Lors de cette opération, le dispositif de piquage (1, 1') effectue des courses de piquage périodiques de longueur égale.
Le procédé est caractérisé par les éléments suivants:
a) avant chaque course de piquage, un certain nombre de morceaux d'aliments différents (7), rangés en file les uns à côté des autres, est transporté dans la zone de piquage,
b) plusieurs broches de piquage (2, 2') placées à espaces réguliers les uns par rapport aux autres sont fixées sur le dispositif d'avancement (6, 18, 25) du système de piquage (1, 1') ce dernier se dirigeant vers les files de morceaux d'aliments. Dans le cadre de cette opération, le dispositif de piquage (1, 1') se trouve au-dessus du dispositif de transport (3) des morceaux d'aliments (7), et
c) après chaque course de piquage, le dispositif d'avancement (6, 18, et 25) effectue un mouvement d'avance des broches de piquage (2, 2') dont la longueur correspond à la distance d'une broche à l'autre, de sorte qu'il s'ensuit une augmentation de la distance entre la broche de piquage (2, 2') et le dispositif de transport (3) correspondant à la longueur d'épaisseur moyenne du morceau d'aliment (7).

2. Le procédé conformément à la spécification 1, caractérisé par le fait que pendant chaque course de piquage, une broche de piquage (2, 2') est fixée au début du dispositif d'avancement (6, 18, et 25), et, d'autre part, une broche de piquage (2, 2') est enlevée à la fin du dispositif d'avancement (6, 18, et 25).

3. Le procédé conformément aux spécifications 1 ou 2, caractérisé par le fait que le nombre des morceaux d'aliments rangés dans une file est conforme à la garniture d'une cheville (27).

4. Le procédé conformément à au moins une des spécifications 1 à 3, caractérisé par le fait que les morceaux d'aliments (7) sont posés sur un dispositif de transport (3) horizontal qui sert de bande d'alimentation (4) équipée de cavités (5) destinées à recevoir les morceaux d'aliments (7). Chacune de ces cavités a un trou central permettant le piquage par la broche (2, 2').

5. Le procédé conformément à la spécification 3, caractérisé par le fait qu'un certain nombre de broches de piquage (2, 2') forme des files de broches de piquage allant en direction transversale par rapport au sens d'avancement et qui sont fixées à espaces réguliers sur le dispositif d'avancement (6, 18, 25) du dispositif de piquage (1, 1'). Dans le cadre de cette opération, pendant chaque course de piquage, une file de broches est fixée au début du dispositif d'avancement (6, 18, 25) et, d'autre part, une file de broches est enlevée à la fin du dispositif d'avancement (6,18, 25).

6. Le procédé conformément à au moins une des spécifications précédentes, caractérisé par le fait que les chevilles (27) elles-mêmes sont fixées sur le dispositif de piquage (1,1') pour constitution des broches de piquage (2).

7. Le procédé conformément à au moins une des spécifications précédentes, caractérisé par le fait que des broches creuses métalliques (2') sont fixées sur le dispositif de piquage pour constitution des broches de piquage (1, 1'). Pendant chaque course de piquage, les aliments sont lancés par une broche creuse entièrement remplie (2') sur une cheville (27), resp. par les broches creuses (2') d'une file de broches de piquage entièrement remplies sur un certain nombre de chevilles (27).

8. Le dispositif destiné à exécuter le procédé conformément à au moins une des spécifications précédentes, caractérisé par le fait que le dispositif de transport (3) est équipé d'une bande d'alimentation horizontale (4, 4', 4''), au-dessus de laquelle se trouve - dans la zone de piquage - un cadre élévateur (12, 13, 14) constituant le dispositif de piquage (1') et qui est raccordé à un entraînement (15, 16, 17) commandant la course verticale de piquage du cadre élévateur (12, 13, 14) et concourant avec un dispositif d'avancement (18 et 25) qui assure la position verticale des broches (2, 2') et un espacement régulier entre-elles. Dans le sens de l'avance, et par rapport à la bande d'alimentation (4, 4', 4''), le dispositif d'avancement (18 et 25) est incliné vers le haut dans un angle (α), et est raccordé à un entraînement (26) assurant l'avancement des broches de piquage (2, 2') - entre deux courses de piquage - d'une longueur d'avancement correspondant à l'écart entre les broches. L'angle (α) est choisi de telle façon que sur la distance d'un mouvement d'avance, l'écart entre la bande d'alimentation (4, 4', 4'') et les broches de piquage (2, 2') augmente de la valeur de l'épaisseur moyenne des morceaux d'aliments.

9. Le dispositif conformément à la spécification 8, caractérisé par le fait qu'un certain nombre de broches de piquage (2, 2') est fixé sur des plaques de piquage (20) pour former des files de broches de piquage. Les plaques de piquage peuvent être fixées sur le dispositif d'avancement (18 et 25), transversalement par rapport au sens de l'avancement et à espacements réguliers entre les plaques.

10. Le dispositif conformément aux spécifications 8 et 9, caractérisé par le fait que l'angle (α) entre le dispositif d'avancement (6, 17, et 24) et la bande d'alimentation (4, 4', 4'') est réglable dans le but de l'adapter à l'épaisseur moyenne des morceaux d'aliments.

11. Le dispositif conformément à au moins une des spécifications 8 à 10, caractérisé par le fait que le dispositif d'avancement est équipé d'embrayages de retenue (25) réglables, disposés à espacements égaux sur le dispositif d'avancement et destinés à recevoir les broches de piquage (2, 2') mobiles.

12. Le dispositif conformément à la spécification 11, caractérisé par le fait que le dispositif d'avancement est équipé de rails-guides (18) disposés dans le sens de l'avancement et pouvant recevoir des galets-guides (19) placés sur les flancs (42) des plaques de piquage (20). Les embrayages de retenue du dispositif d'avancement sont formés par des barres de support verticales (25) entraînées dans le sens de l'avancement. Au début des rails-guides (18), ces barres se posent contre le flanc frontal des plaques de piquage (20) et, à la fin des rails-guides (18), ces barres lâchent le flanc des plaques de piquage (20).

13. Le dispositif conformément à au moins une des spécifications 8 à 12, caractérisé par le fait que les broches de piquage (2, 2')sont formées par les chevilles (27) elles-mêmes.

14. Le dispositif conformément à au moins une des spécifications 8 à 12, caractérisé par le fait que les broches de piquage sont formées de broches creuses métalliques (2') et que l'installation est équipée d'un dévêtisseur (34-38) qui, pendant chaque course de piquage, transfère les aliments d'une broche creuse complètement remplie (2') sur une cheville (27), resp. les transfère des broches creuses (2') d'une file de broches complètement remplies sur un certain nombre de chevilles (27).

15. Le dispositif, conformément à la spécification 14, caractérisé par
a) un dispositif d'amenée des chevilles (28-32) qui introduit les chevilles (27) dans les creux des broches creuses (2') complètement remplies,
b) un dévêtisseur (34) qui, lors de chaque course de piquage, enlève les morceaux d'aliments d'une broche creuse (2') entièrement remplie, ou d'une file de broches creuses entièrement remplies et
c) un dispositif de serrage (37) qui, pendant l'enlèvement des morceaux d'aliments, fixe la cheville (27) introduite dans la broche creuse entièrement remplie (2') dans sa position par rapport au dévêtisseur (34).

16. Le dispositif conformément à la spécification 15, caractérisé par le fait que le dispositif d'amenée des chevilles comprend les éléments suivants:
a) un réservoir de réserve (28) destiné à recevoir les chevilles (27) en position horizontale avec au moins une fente de sortie en bas (29),
b) une plaque mobile disposée au-dessous du réservoir de réserve (28) et recouvrant la fente de sortie (29), munie de rainures (31) pour chacune des chevilles (27).
c) un convoyeur amovible (32), tournant autour d'un axe horizontal et disposé au-dessus du dispositif de piquage (1'), équipé d'ouvertures de réception pour chacune des chevilles (27). Les ouvertures de réception sont alignées dans une position horizontale de réception sur chacune des rainures de réception (31) de la plaque (30), de sorte que la cheville (27) se trouvant dans la rainure de réception (31) puisse être introduite dans l'ouverture de réception, et de sorte que les ouvertures de réception, après une rotation du convoyeur (32) d'un angle de 270 , s'alignent dans une position d'amenée verticale sur chacun des creux de broches (2'), de façon que la cheville (27) - lors de la course de retour du dispositif de piquage - puisse être introduite dans ce creux.

17. Le dispositif conformément à au moins une des spécifications 8 à 16 caractérisé par le fait qu'il comprend un dispositif de retour des broches creuses (10, 39) et placé à la fin du dispositif d'avancement (6, 18, et 25).

18. Le dispositif conformément à la spécification 17, caractérisé par le fait que le dispositif de retour (10) passe par un dispositif de nettoyage (11) pour nettoyer les broches creuses (2').

19. Le dispositif conformément aux spécifications 17 et 18, caractérisé par le fait que le dispositif de retour est équipé d'une paire de chaînes de retour (39) disposée au-dessous du dispositif de transport. Dans le cadre de cette application, les plaques de piquage (20) garnies des broches creuses (2') descendent au bout des rails-guides(18) entre les barres de support verticales (25), et tombent sur le début de la paire de chaînes de retour (39). A la fin de la paire des chaines de retour (39), se trouve un moyen de levage (40) qui remonte les plaques de piquage (20), entre les barres de support verticales (25), au niveau du début des rails-guides (18).

20. Le dispositif conformément à au moins une des spécifications 8 à 19, caractérisé par le fait que la bande d'alimentation (4) est équipée de cavités destinées à recevoir les morceaux d'aliments (7) et dont chacune possède un trou central permettant le piquage des broches (2, 2').

21. Dispositif conformément à la spécification 20, caractérisé par le fait que les cavités (5) destinées à centrer les morceaux d'aliments ont la forme d'un entonnoir.

22. Dispositif conformément à la spécification 20 ou 21, caractérisé par le fait que les dimensions et la forme des cavités (5) destinées à recevoir les différents morceaux d'aliments (7) pour garnir la cheville sont adaptées aux morceaux d'aliments (7) concernés.

23. Le dispositif conformément à une des spécifications 8 à 22, caractérisé par le fait que le sens de transport de la bande d'alimentation (4, 4', 4'') est rectangulaire par rapport au sens d'avancement du dispositif d'avancement (6 et/ou 18 et 25) du dispositif de piquage (1 resp. 1').
